# EUROPÄISCHE PATENTSCHRIFT

(11) **EP 0 525 391 B1**
(45) Veröffentlichungstag und Bekanntmachung des Hinweises auf die Patenterteilung: **04.01.1995**
(21) Anmeldenummer: 92110724.9
(22) Anmeldetag: 25.06.1992
(51) Int. Cl.: G01V 1/38

(54) **Verfahren und Messanordnung zur marineseismischen Datenerfassung mit von einem Schiff geschleppten, aufgefächerten Streamern**
Procedure and measuring device for the marine seismic data acquisition with spaced streamers towed by a ship
Procédé et dispositif de mesure pour la saisie de données marine sismique avec flutes marines en éventail halés d'un bateau

(30) Priorität: 01.08.1991 DE 4125461
(43) Veröffentlichungstag der Anmeldung: 03.02.1993
(73) Patentinhaber: Prakla-Seismos GmbH, 30655 Hannover (DE)
(72) Erfinder: Marschall, Roland, Dr. mont. Dipl.-Ing., W-3000 Hannover 91 (DE)
(74) Vertreter: Meyer, Ludgerus A., Dipl.-Ing.

(56) Entgegenhaltungen:
- US-A- 3 973 236
- US-A- 4 404 664
- US-A- 4 872 144

## Beschreibung

Die Erfindung betrifft ein Verfahren und eine Meßanordnung zur marineseismischen Datenerfassung mit von einem Schiff geschleppten Streamern nach dem Oberbegriff der Ansprüche 1 bzw. 6.

Die Erfassung marineseismischer Daten erfolgt heute im wesentlichen durch hinter Schiffen geschleppte Streamer. Das Schiff wird dabei vorzugsweise in parallelen Kursen über das zu erfassende Gebiet geführt. An den jeweiligen Enden einer Strecke wird das Schiff mit der Meßanordnung gewendet und in einem Abstand parallel zum vorhergehend gefahrenen Kurs in umgekehrter Richtung über das zu erfassende Gebiet geführt. Die Abstände zweier benachbarter Strecken müssen dabei zur Gewährleistung einer einigermaßen gleichmäßigen Flächenverteilung der gemessen Untergrundspunkte sehr eng zusammen liegen. Das daher notwendige häufige Abfahren der eng nebeneinander liegenden Strecken ist zeitaufwendig und damit kostenintensiv.

Ferner ist es bekannt, für die marineseismische 3-D-Meßdatenerfassung gleichzeitig mehrere beabstandet angeordnete Streamer von einem Schiff zu schleppen. Dabei werden die Streamer ebenfalls parallel zur Kurslinie geführt. Insbesondere bei gleichzeitiger Verwendung von mehreren quer zur Kurslinie beabstandet angeordneten seismischen Quellen läßt sich ein Untergrundstreifen redundant 3-dimensional erfassen. Die erfaßten Untergrundpunkte sind dabei flächenmäßig verteilt.

Nachteilig ist, daß der überdeckte Untergrundstreifen gleichwohl noch eine relativ geringe Breite aufweist. Folglich müssen benachbarte Profilfahrten dennoch einen entsprechend geringen Abstand zueinander aufweisen. Außerdem ist es bei der geringen Breite des Untergrundstreifens schwierig, quer zur Profilfahrt geneigte Untergrundstrukturen zu erkennen.

Aus der DE 23 23 099 C2 und dem Zusatzpatent DE 24 30 863 C2 ist ein marineseismisches Aufschlußverfahren zur 3-dimensionalen Datenerfassung bekannt, bei dem eine seismische Quelle und ein Streamer vom Schiff geschleppt werden, wobei das hintere Ende des Streamers in einem festen Abstand parallel zur Grundkurslinie bewegt wird. Als Weiterentwicklung beschreibt das Zusatzpatent, daß das Schiff einen zweiten Streamer entlang der Grundkurslinie schleppt. Der überdeckte Untergrundstreifen ergibt sich als 2-dimensionales Mittelpunktgitter. Der ausgestellte Streamer wird mit einer am Ende des Streamers angeordneten Otter-Einrichtung ausgelenkt und mit einem Querversetzungswinkel von etwa 13° zwischen der Otter-Einrichtung und der Kurslinie geschleppt. Aufgrund dieser Anordnung ist der Streamer bei Meßfahrt in Form einer 2- oder 3-dimensionalen Kettenlinie gekrümmt.

Nachteilig ist, daß eine beliebige Steuerbarkeit der Auslenkung des Streamers nicht vorgesehen ist und der Überdeckungsstreifen bei einseitiger Auslenkung relativ schmal ist.

Aufgabe der Erfindung ist es daher, ein Verfahren und eine Meßanordnung zur marineseismischen Datenerfassung zu schaffen, bei der ein jeweils an das Seegebiet angepaßter möglichst breiter Untergrundstreifen mit einer einzigen Profilfahrt erfaßbar ist.

Diese Aufgabe wird durch die in den Ansprüchen 1 bzw. 6 angegebene Erfindung gelöst.

Durch Anwendung der Erfindung läßt sich vorteilhaft eine jeweils an das Seegebiet angepaßte ganz erhebliche Verbreiterung der Auslage erreichen. Damit vergrößert sich auch die Breite des überdeckten Untergrundstreifens, so daß benachbarte profilstrecken entsprechend weiter beabstandet sein können. Insbesondere kann in Küstengebieten, z. B. in Fjorden, Buchten und Fahrwassern, eine optimale Ausnutzung der möglichen Auslagenbreite der vom Schiff geschleppten Streameranordnung durch variables Ausstellen der Streamer und Umfahren von Untiefen und Hindernissen erreicht werden. Ferner ist es möglich, Abdriftveränderungen auszugleichen oder auf freien Seegebieten Bohrinseln und ähnlichen Hindernissen auszuweichen. Vorteilhaft ergibt sich damit, daß für die 3-dimensionale seismische Vermessung eines Seegebietes weniger nebeneinander liegende Profilstrecken abgefahren werden müssen. Insgesamt ergibt sich eine hohe Kosten- und Zeitersparnis.

In Ausgestaltung des Verfahrens wird die Position der geschleppten Streamer, vorzugsweise ständig wiederholend, erfaßt. Damit ist eine genaue Zuordnung der seismischen Spuren zu bestimmten Untergrundspunkten möglich.

Dadurch, daß der ausgestellte Streamer im wesentlichen geradlinig gehalten wird, ist eine möglichst gleichmäßige Verteilung von Untergrundspunkten senkrecht zur Kurslinie gewährleistet.

In vorteilhafter Ausgestaltung des Verfahrens ist neben den aufgefächerten Streamern zur breiten Untergrundüberdeckung mindestens ein konventionell angeordneter Streamer vorgesehen. Bei einem konventionell geführten Streamer können mit den Meßdaten aufgrund hoher Mehrfachüberdeckung Geschwindigkeitsanalysen und ähnliche Bearbeitungsschritte durchgeführt werden.

Mit mindestens zwei konventionell, d.h. parallel zur Kurslinie, geführten Streamern kann vorteilhaft neben der erfindungsgemäßen breiten Untergrundüberdeckung eine 3-dimensionale konventionelle Meßdatenerfassung im zentralen Bereich des überdeckten Untergrundstreifens erreicht werden und zwar in redundanter Mehrfachüberdeckung. In der Auswertung können dann laterale Geschwindigkeitsänderungen von geneigten Horizonten unterschieden und Neigungsrichtungen bestimmt werden.

Die Meßdaten werden entsprechend den Hydrophon- und Quellenpunktorten berechneten Mittelpunkten zugeordnet. Die Mittelpunkte werden zur nachfolgenden Datenverarbeitung einem Flächenraster durch Verwendung einer sich bekannten "Binning"-Technik zugeordnet.

Die durch den erhöhten Strömungswiderstand an den aufgefächert geschleppten Streamern erzeugten Störgeräusche werden vorteilhaft mit Filterprozessen und/oder der Verwendung von Hydrophonen mit Richtcharakteristik unterdrückt.

Die erfindungsgemäße Meßanordnung zur marineseismischen Datenerfassung weist mindestens eine Aufhaltevorrichtung auf, die ein vom Schiff gesteuertes hydrodynamisch wirkendes Scherbrett aufweist. Mit einer derartigen Anordnung können die Streamer allein aufgrund der bei Profilfahrt wirkenden Umströmung ausgestellt bzw. aufgefächert werden. Der Anstellwinkel der Scherbretter läßt sich vom Schiff aus steuern, um jederzeit Korrekturen an der Streameranordnung ausführen zu können.

In besonderer Ausgestaltung der Vorrichtung sind Dipolhydrophone mit rechtwinklig zur Streamerlängsachse angeordneter Polebene im Streamer vorgesehen, so daß bereits bei der Meßdatenaufnahme Strömungsstörgeräusche unterdrückt werden.

Weiter können Strömungsstörgeräusche mit einem im wesentlichen tropfenförmigen Querschnitt aufweisenden Streamer verringert werden. Damit werden Strömungsturbulenzen am schräg durchs Wasser gezogenen, ausgestellten Streamer vermindert.

In weiterer Ausgestaltung kann die Ausbildung von im Streamer geführten Störwellen durch Angleichen der akustischen Impedanz von Streamerumhüllung und -flüssigkeit vermindert werden.

Die Erfindung wird anhand der Zeichnung im folgenden näher beschrieben.

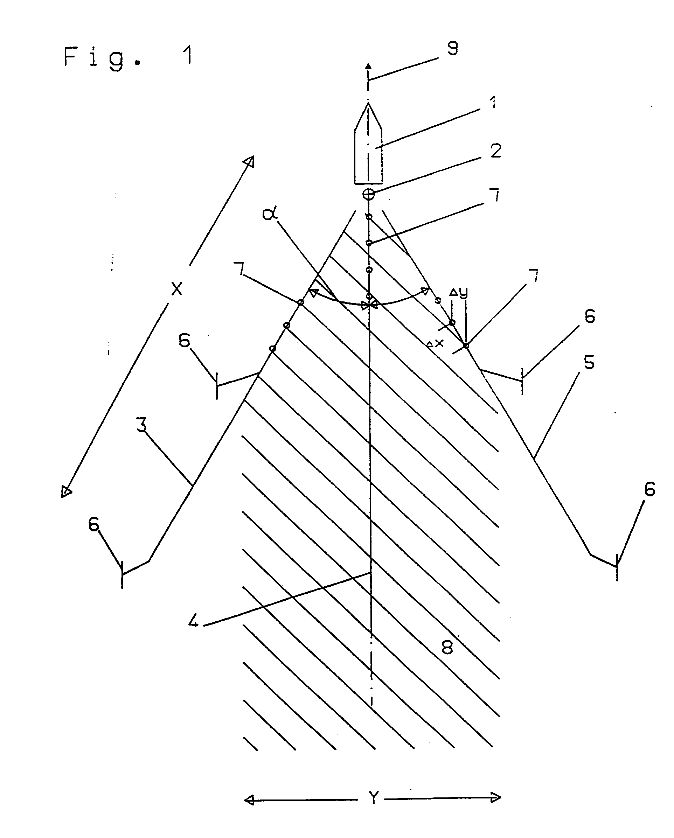

- Fig. 1: zeigt schematisch eine erfindungsgemäße Meßanordnung.

Das Meßschiff 1 schleppt sowohl die seismische Quelle 2 als auch die mit Meßaufnehmern (Hydrophongruppen) 7 ausgestatteten Streamer 3, 4, 5. Der Streamer 4 wird in herkömmlicher Weise auf der Kurslinie 9 hinter dem Meßschiff 1 hergezogen. Die Streamer 3 und 5 sind um den Winkel α rechts und links der Kurslinie 9 aufgefächert. Die Länge der ausgestellten Streamer 3, 5 ist mit X bezeichnet. Diese Meßanordnung überdeckt einen Untergrundstreifen 8, der in Fig. 1 schraffiert dargestellt ist.

Um den Strömungswiderstand der schräg durchs Wasser gezogenen Streamer 3, 5 beherrschbar zu halten, sind vorzugsweise Ausstellwinkel von α ≦ 45° zu verwenden. Wird α = 30° gewählt, so ergibt sich eine Breite Y des überdeckten Untergrundsreifens 8 von Y = X / 2. Daraus folgt bei Verwendung von Streamern üblicher Länge X von 1,2 bzw. 2,4 km eine Breite Y von 0,6 bzw. 1,2 km des überdeckten Untergrundstreifens 8. Zur flächendeckenden 3-D-Erfassung des Untergrundes sind damit lediglich jeweils um 0,6 bzw. 1,2 km beabstandete, nebeneinander liegende Profilfahrten nötig. Das zu erfassende Meßgebiet wird so vorteilhaft schnell vermessen. Die Folge sind erhebliche Kostenersparnisse für die vollständige seismische 3-D-Erfassung.

Weiter ergibt sich bei dieser Geometrie bei einem Abstand x der Hydrophongruppen 7 in den Streamern 3, 5 ein lateraler Meßpunktabstand von y = x / 2. Mit diesem Meßpunktabstand quer zur Kurslinie und dem durch gewöhnlichen Meßfortschritt in Kurslinie erreichten Meßpunktabstand, der beispielsweise dem Hydrophonengruppenabstand x entspricht, wird der zu untersuchende Untergrund rasterartig vermessen. Der schnellere Meßfortschritt wird mit einer gegenüber herkömmlicher 3-D-Marineseismik verringerten Mehrfachüberdeckung im aufgefächerten Bereich erreicht.

Die Auswertung der zu einem Reflexionspunkt im Untergrund gehörenden seismischen Einsätze zur Geschwindigkeitsanalyse wird daher vorteilhaft auf die Daten des herkömmlich angeordneten Streamers, der mit hoher Überdeckung aufzeichnet, beschränkt. Die so auf jeder Profilfahrt entlang der Kurslinie 9 ermittelten Stapelgeschwindigkeiten können dann in Querrichtung zur Profilfahrt von Profil zu Profil interpoliert werden. Übliche 3-D-Binnigtechniken oder auch spezielle räumliche Samplingfilter können zur weiterer Datenverarbeitung benutzt werden.

Die erfindungsgemäße Meßanordnung weist an den aufgefächerten Streamern 3, 5 angeordnete Aufhaltevorrichtungen 6 auf. Vorteilhaft sind diese Aufhaltevorrichtungen 6 als hydrodynamisch wirkende Scherbretter ausgestaltet. Die bei Profilfahrt umströmten Scherbretter 6 lassen sich in ihrem Anstellwinkel vom Meßschiff 1 aus steuern. Dabei erzeugen die Scherbretter 6 je nach eingestelltem Anstellwinkel eine quer zur Kurslinie 9 gerichtete Kraft, so daß ein mit diesem Scherbrett 6 verbundene Streamer 3, 5 ausgestellt wird und gegen den erhöhten Strömungswiderstand des schräg durchs Wasser gezogenen Streamers 3, 5 diesen in seiner erfindungsgemäß vorgesehenen Lage hält. Vorteilhaft werden dabei die Scherbretter 6 mit einem Seil oder ähnlichem mit den Streamern 3, 5 verbunden. Damit lassen sich die an den Scherbrettern 6 auftretenden Strömungsstörgeräusche vom Streamer fernhalten.

Mit Hilfe von zur Streamerortung üblichen Instrumenten läßt sich die Lage der aufgefächerten Streameranordnung bestimmen. Beispielsweise können die Streamer mit Kompassen mit einer Regeleinrichtung verbunden sein, die die Anstellwinkel der am Streamer verteilten Aufhaltevorrichtungen 6 ständig nachregeln, so daß ein bestimmter vorgewählter Ausstellwinkel während der gesamten Profilfahrt eingehalten werden kann.

Die Hydrophongruppen 7 in den Streamern sind aus Dipolhydrophonen aufgebaut. Die Dipolhydrophone besitzen eine Richtcharakteristik, so daß entlang des Streamers laufende Störwellen unterdrückt werden.

Zur weiteren Verminderung der Strömungsstörgeräusche sind die aufgefächerten Streamer 3, 5 mit tropfenförmigem Querschnitt ausgebildet. Die Tropfenform verringert den Strömungswiderstand der schräg durchs Wasser gezogenen, aufgefächerten Streamer 3, 5.

## Patentansprüche

1. Verfahren zur marineseismischen Datenerfassung mit mindestens einem von einem Schiff geschleppten Streamer, dessen hinteres Ende in einem im wesentlichen festen Abstand parallel zur Kurslinie bewegt wird, wobei der Streamer in einem spitzen Ausstellwinkel (α) zwischen seiner Längsachse und der Kurslinie des Schiffes (1) gehalten wird, und mit mindestens einer vom Schiff geschleppten seismischen Quelle, dadurch gekennzeichnet, daß die Längsachse des im Winkel zur Kurslinie geführten Streamers (3, 5) im wesentlichen gradlinig gehalten wird und daß der Ausstellwinkel (α) vom Schiff (1) aus beliebig in einem weiten Winkelbereich steuerbar ist, um während einer einzigen Meßfahrt einen breiten kontinuierlichen Überdeckungsstreifen seismisch zu erfassen.

2. Verfahren nach Anspruch 1, bei dem mindestens ein Streamer (4) mit seiner Längsachse parallel zur Kurslinie geführt wird, dadurch gekennzeichnet, daß mehrere weitere Streamer (3, 5) mit ihren Längsachsen beiderseits der Kurslinie (9) in einer Fächeranordnung ausgestellt geführt werden.

3. Verfahren nach Anspruch 1 oder 2, dadurch gekennzeichnet, daß die räumliche Lage der Streamer erfaßt wird.

4. Verfahren nach einem der Ansprüche 1 - 3, dadurch gekennzeichnet, daß die Meßdaten als 3-D-Datenvolumen erfaßt werden.

5. Verfahren nach einem der Ansprüche 1 - 4, dadurch gekennzeichnet, daß die Meßdaten zur Störgeräuschunterdrückung gefiltert werden.

6. Meßanordnung zur marineseismischen Datenerfassung mit mindestens einem von einem Schiff geschleppten Streamer, wobei mindestens ein Streamer (3, 5) mit einer Aufhaltevorrichtung (6) zusammenwirkt, durch die der Streamer mit seiner Längsachse in einem spitzen Ausstellwinkel (α) zur Kurslinie (9) gehalten wird, insbesondere zur Durchführung des Verfahrens nach Anspruch 1, dadurch gekennzeichnet, daß eine Aufhaltevorrichtung (6) zur Einstellung des Ausstellwinkels (α) ein vom Schiff aus steuerbares hydrodynamisch wirkendes Scherbrett aufweist.

7. Meßanordnung nach Anspruch 6, dadurch gekennzeichnet, daß entlang des ausgestellten Streamer (3, 5) mehrere Aufhaltevorrichtungen (6) angeordnet sind.

8. Meßanordnung nach Ansprüche 6 oder 7, dadurch gekennzeichnet, daß mindestens der ausgestellte Streamer mit Dipolhydrophonen ausgestattet ist, deren Polebene rechtwinklig zur Streamer-Längsachse ausgerichtet ist.

9. Meßanordnung nach Ansprüche 6, 7 oder 8, dadurch gekennzeichnet, daß der ausgestellte Streamer (3, 5) einen im wesentlichen tropfenförmigen Querschnitt aufweist.

10. Meßanordnung nach einem der Ansprüche 6 - 9, dadurch gekennzeichnet, daß mindestens der ausgestellte Streamer eine äußere Umhüllung aufweist, die annähernd die gleiche akustische Impedanz wie die im Streamer befindliche Flüssigkeit aufweist.

## Claims

1. Method for marine-seismic data acquisition having at least one streamer towed by a ship, the rear end of which streamer is moved at an essentially fixed distance parallel to the line of course, the streamer being held at an acute deployment angle (α) between its longitudinal axis and the line of course of the ship (1), and having at least one seismic source towed by the ship, characterised in that the longitudinal axis of the streamer (3, 5) guided at an angle to the line of course is kept essentially linear, and in that the deployment angle (α) can be controlled from the ship (1) as desired in a wide angular region in order to be able to cover seismically a broad continuous coverage strip during a single measurement journey.

2. Method according to Claim 1, in which at least one streamer (4) is guided with its longitudinal axis parallel to the line of course, characterised in that a plurality of further streamers (3, 5) are guided with their longitudinal axes deployed on both sides of the line of course (9) in a fan arrangement.

3. Method according to Claim 1 or 2, characterised in that the spatial position of the streamers is detected.

4. Method according to one of Claims 1 - 3, characterised in that the measurement data are detected as 3-D data volumes.

5. Method according to one of Claims 1 - 4, characterised in that the measurement data are filtered for the purpose of interference noise suppression.

6. Measurement arrangement for marine-seismic data acquisition having at least one streamer towed by a ship, at least one streamer (3, 5) interacting with a holding-open device (6) by means of which the streamer is held with its longitudinal axis at an acute deployment angle (α) with respect to the line of course (9), in particular for the purpose of carrying out the method according to Claim 1, characterised in that a holding-open device (6) for adjusting the deployment angle (α) has an otter board which can be controlled from the ship and acts hydro-dynamically.

7. Measurement arrangement according to Claim 6, characterised in that a plurality of holding-open devices (6) are arranged along the extended streamer (3, 5).

8. Measurement arrangement according to Claim 6 or 7, characterised in that at least the deployed streamer is equipped with dipole hydrophones whose pole plane is aligned at right angles to the streamer longitudinal axis.

9. Measurement arrangement according to Claim 6, 7 or 8, characterised in that the deployed streamer (3, 5) has an essentially droplet-shaped cross-section.

10. Measurement arrangement according to one of Claims 6 - 9, characterised in that at least the deployed streamer has an outer covering which has approximately the same acoustic impedance as the liquid located in the streamer.

## Revendications

1. Procédé pour l'enregistrement de données sismiques marines à l'aide d'au moins une flûte marine traînée par un bateau, dont l'extrémité arrière est déplacée à une distance sensiblement fixe, parallèlement à la ligne de route, étant précisé que la flûte marine est maintenue entre son axe longitudinal et la ligne de route du bateau (1) suivant un angle d'orientation aigu (α), et à l'aide d'au moins une source sismique traînée par le bateau, caractérisé en ce que l'axe longitudinal de la flûte (3, 5) guidée suivant un certain angle par rapport à la ligne de route est maintenu sensiblement rectiligne, et en ce que l'angle d'orientation (α) est apte à être commandé à volonté dans une large plage angulaire, à partir du bateau (1), afin d'enregistrer par voie sismique une large bande de recouvrement continue en un seul trajet de mesure.

2. Procédé selon la revendication 1, selon lequel au moins une flûte marine (4) est guidée avec son axe longitudinal parallèle à la ligne de route, caractérisé en ce que plusieurs autres flûtes marines (3, 5) sont guidées avec leurs axes longitudinaux orientés en éventail des deux côtés de la ligne de route (9).

3. Procédé selon la revendication 1 ou 2, caractérisé en ce que la position des flûtes marines dans l'espace est enregistrée.

4. Procédé selon l'une des revendications 1 à 3, caractérisé en ce que les données de mesure sont enregistrées sous la forme de volumes de données en 3 dimensions.

5. Procédé selon l'une des revendications 1 à 4, caractérisé en ce que les données de mesure sont filtrées afin d'empêcher des bruits parasites.

6. Dispositif de mesure pour l'enregistrement de données sismiques marines, comportant au moins une flûte marine traînée par un bateau, étant précisé qu'au moins une flûte (3, 5) coopère avec un dispositif d'arrêt (6) grâce auquel l'axe longitudinal de la flûte est maintenu par rapport à la ligne de route suivant un angle d'orientation aigu (α), en particulier pour la mise en oeuvre du procédé selon la revendication 1, caractérisé en ce qu'un dispositif d'arrêt (6) comporte, pour le réglage de l'angle d'orientation (α), un râteau apte à être commandé à partir du bateau et agissant par voie hydrodynamique.

7. Dispositif de mesure selon la revendication 6, caractérisé en ce que plusieurs dispositifs d'arrêt (6) sont disposés le long de la flûte orientée (3, 5).

8. Dispositif de mesure selon les revendications 6 ou 7, caractérisé en ce que la flûte orientée, au moins, est équipée d'hydrophones dipôles dont le plan de pôles est orienté à angle droit par rapport à l'axe longitudinal de la flûte.

9. Dispositif de mesure selon les revendications 6, 7 ou 8, caractérisé en ce que la flûte orientée (3, 5) présente une section transversale sensiblement en forme de goutte.

10. Dispositif de mesure selon l'une des revendications 6 à 9, caractérisé en ce que la flûte orientée, au moins, comporte une enveloppe extérieure qui présente approximativement la même impédance acoustique que le liquide qui se trouve dans la flûte.
